# EUROPEAN PATENT SPECIFICATION

(11) **EP 2 939 328 B1**
(45) Date of publication and mention of the grant of the patent: **26.01.2022**
(21) Application number: 13831875.3
(22) Date of filing: 27.12.2013
(51) Int. Cl.: H02K 1/02, H02K 1/27, H02K 7/18

(54) **ELECTRIC MACHINE**
ELEKTRISCHE MASCHINE
MACHINE ÉLECTRIQUE

(30) Priority: 28.12.2012 IT MI20122268
(43) Date of publication of application: 04.11.2015
(73) Proprietor: WINDFIN B.V., 2451 VW Leimuiden (NL)
(72) Inventor: SCUOTTO, Mattia, I-39049 Vipiteno (IT); FOLIE, Georg, I-39049 Wiesen (IT)
(74) Representative: Eccetto, Mauro
(86) International application number: PCT/IB2013/061380
(87) International publication number: WO 2014/102751

(56) References cited:
- EP-A1- 2 048 772
- EP-A1- 2 498 267
- EP-A1- 2 498 376
- EP-A2- 2 237 389
- WO-A2-2007/063369
- JP-A- H08 340 651
- US-A1- 2007 284 960
- US-A1- 2008 303 368
- US-A1- 2010 171 385
- US-A1- 2012 262 019

## Description

### TECHNICAL FIELD

The present invention relates to an electric machine.

The electric machine comprises a stator and a rotor separated by an air gap, and wherein the rotor rotates with respect to the stator about an axis of rotation.

The stator comprises an outer cylinder, and stator segments arranged about the axis of rotation.

The rotor comprises an inner cylinder, and rotor segments arranged about the axis of rotation. Each rotor segment comprises modules with magnetic properties and arranged inside the rotor segment. In the following description, these modules are referred to simply as 'modules'.

### BACKGROUND ART

Different types of modules with different characteristics are available on the market.

Different types of modules are disclosed in documents EP 2498267; US 2012/262019; US 2008/0303368 JP H08 340651; and WO 2007/063369 A2.

In particular, WO 2007/063369 A2 discloses a rotating electric machine comprising rotor segments; wherein each rotor segment comprising magnetic guides; at least a magnetic module and a gripper.

US 2008/0303368 discloses a permanent magnet machine comprising a plurality of multi-layered permanent magnets embedded in the rotor.

The main characteristics are thermal class, energy class, and maximum energy product. The maximum energy product of each module is the product of the magnetic field value and the magnetic field induction value of the normal magnetization curve; which values are chosen so that their product is maximum at nominal operating temperature.

In actual practice, the work point of each module is determined by the intersection of the electric machine magnetic circuit load line and the normal magnetization curve of the module. To minimize the size of the magnet, the electric machine is designed so that the work point corresponds to the maximum energy product value, and on the basis of the mean magnetic field values defined by analysing the magnetic circuit of the electric machine.

One drawback of the known art lies in the load line of the module varying along the normal magnetization curve during operation, with the result that the work point oscillates over time and does not correspond to the work point originally defined.

Over and above a given threshold, this oscillation demagnetizes the modules irreversibly, thus resulting in a loss of efficiency of the electric machine.

### DISCLOSURE OF INVENTION

It is an object of the present invention to provide an electric machine designed to reduce the drawbacks of the known art.

According to the present invention, there is provided an electric machine comprising a stator and a rotor separated by an air gap, and wherein the rotor rotates with respect to the stator about an axis of rotation; the rotor comprising rotor segments arranged about the axis of rotation to a rotor cylinder; each rotor segment comprising a gripper; magnetic guides; at least a first module and a second module of material with magnetic properties and permanently magnetizable; and fasteners; wherein each group of modules is located between a respective pair of magnetic guides, and each pair of magnetic guides is housed inside gripper, which is fixed to rotor cylinder by fasteners; the first module and second module having different magnetic characteristics; wherein the first module is of a higher thermal class than the second module; wherein the first module is adjacent to the air gap, and is radially closer to the air gap than the second module; wherein the electric machine comprises a further first module, and the first module is adjacent to the air gap, and is radially closer to the air gap than the second module and the further first module; the second module is located between the first module and the further first module; the first module and further first module have the same magnetic characteristics.

The present invention guarantees a high degree of long-term efficiency of the electric machine, alongside a relatively low-cost rotor.

In a preferred embodiment, the first module and second module are arranged radially with respect to the axis of rotation, and in particular are aligned radially with each other with respect to the axis of rotation.

In another preferred embodiment, the first module has a higher intrinsic coercive force than the second module.

In another preferred embodiment, the residual induction of the first module is less than or equal to the residual induction of the second module.

In another preferred embodiment, the maximum energy product of the first module is less than or equal to the maximum energy product of the second module.

In another preferred embodiment, the first module has a higher maximum operating temperature than the second module.

In another preferred embodiment, the first module is of a lower or the same energy class as the second module.

In a preferred embodiment, the further first module is radially further from the air gap than the first module and second module.

### BRIEF DESCRIPTION OF THE DRAWINGS

A number of non-limiting embodiments of the present invention will be described by way of example with reference to the attached drawings, in which :
Figure 1 shows a front elevation, with parts removed for clarity, of an electric machine in accordance with the present invention;
Figure 2 shows a larger-scale, partly sectioned front elevation, with parts removed for clarity, of the Figure 1 electric machine and in particular of an embodiment not falling within the scope of the granted claims;
Figure 3 shows a larger-scale section, with parts removed for clarity, of a detail in Figure 2 of an embodiment not falling within the scope of the granted claims;
Figure 4 shows a magnetic characteristics graph of modules with magnetic properties;
Figure 5 shows a section, with parts removed for clarity, of an alternative embodiment of the present invention not falling within the scope of the granted claims;
Figure 6 shows a section, with parts removed for clarity, of the present invention.

### BEST MODE FOR CARRYING OUT THE INVENTION

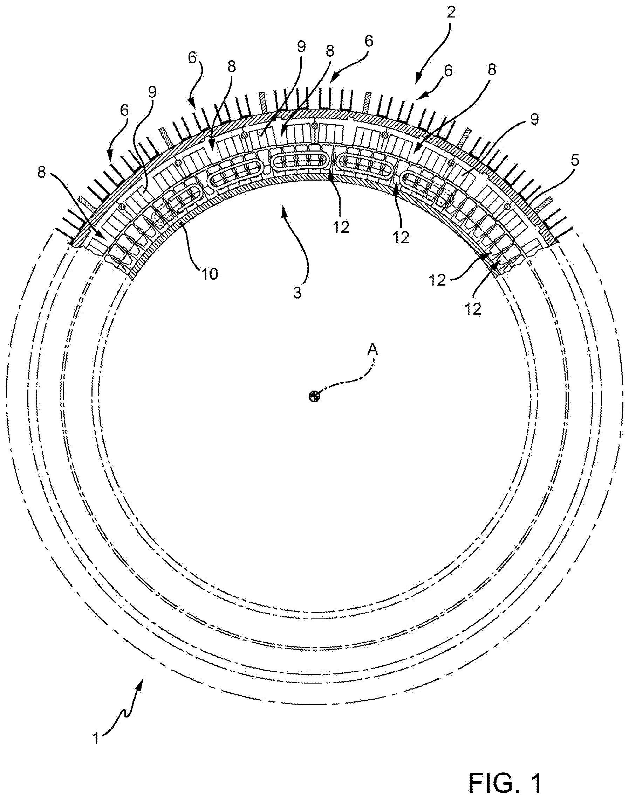

Number 1 in Figure 1 indicates an electric machine.

In the example shown, electric machine 1 is preferably used as an electric generator in a wind power turbine (not shown) for producing electric energy, or as an electric motor in a cable transportation system (not shown).

Electric machine 1 comprises a stator 2 and a rotor 3 separated by an air gap 4. Rotor 3 is hollow and rotates with respect to stator 2 about an axis of rotation A.

Stator 2 comprises a cylinder 5; preferably cooling fins 6 fixed to the outer face of cylinder 5; and a number of stator segments 8 arranged about axis of rotation A and fixed to cylinder 5 by fastening devices not shown in the attached drawings.

In the example shown, cylinder 5 therefore covers, protects, and supports stator segments 8.

Each stator segment 8 comprises windings, and stator lamination packs 9 wound with a three-phase winding, so that each stator segment 8 can be extracted from stator 2 without interacting with the other stator segments 8.

Rotor 3 comprises a rotor cylinder 10; and rotor segments 12 arranged about axis of rotation A.

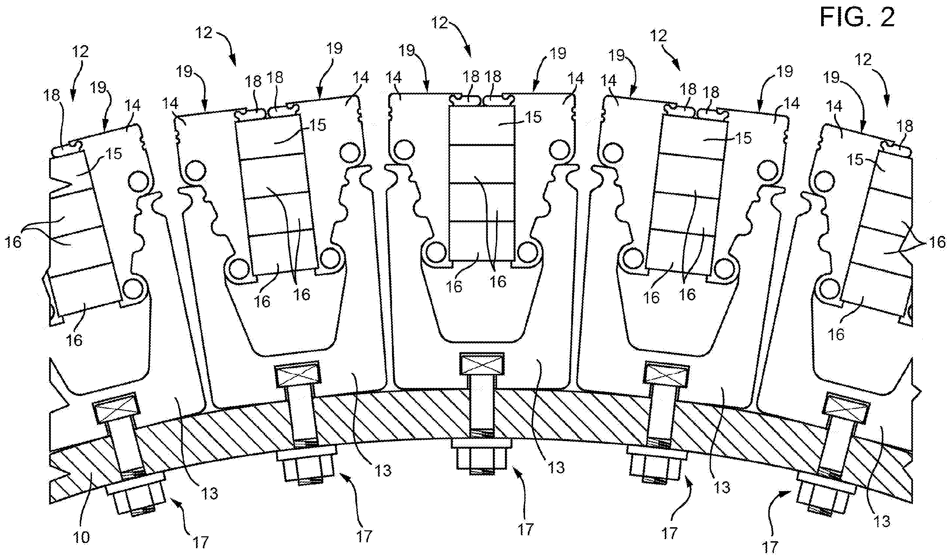

As shown in Figure 2, each rotor segment 12 comprises a gripper 13; magnetic guides 14; first modules 15 of material with magnetic properties; second modules 16 of material with magnetic properties; and fasteners 17.

As shown in Figure 2, first and second modules 15, 16 with magnetic properties are arranged about axis of rotation A.

In each rotor segment 12, first and second modules 15, 16 with magnetic properties are aligned radially with respect to axis of rotation A (Figure 1) to form groups of modules, which in turn are arranged successively, parallel to axis of rotation A (Figure 1), along the whole of rotor segment 12.

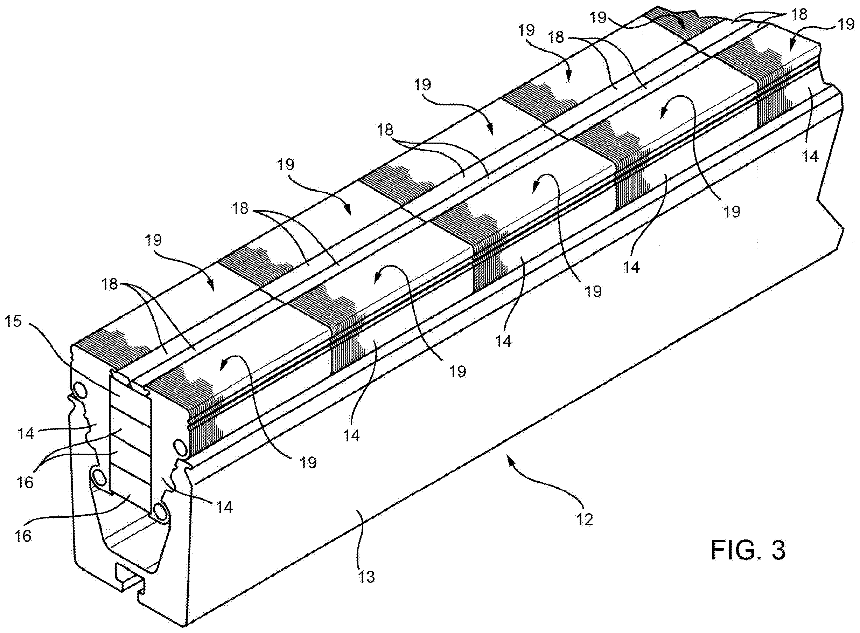

With particular reference to Figures 1 and 2, each group of modules comprises a first module 15 and three second modules 16 aligned radially with respect to axis of rotation A; and, as shown in Figure 3, each rotor segment 12 comprises eleven groups of modules (only five shown in Figure 3) arranged successively, parallel to axis of rotation A. More specifically, first module 15 is adjacent to air gap 4, and is closer to air gap 4 than second modules 16; and second modules 16 are adjacent to rotor cylinder 10, are closer to rotor cylinder 10 than first module 15, and are further from air gap 4 than first module 15.

As shown in Figure 2, each group of modules is located between a respective pair of magnetic guides 14, each defined by a respective lamination pack. Each rotor segment 12 thus comprises eleven pairs of magnetic guides 14. Each pair of magnetic guides 14 is housed inside gripper 13, which is fixed to rotor cylinder 10 by bolts 17. Each pair of magnetic guides 14 has two faces 19 and, in use, is traversed by magnetic induction from first and second modules 15, 16, and defines the field lines. Between magnetic guides 14, the top end of the group of modules is fitted with two protectors made of insulating material to protect the group of modules.

In an alternative embodiment not shown in the drawings, the modules may be of any number, not necessarily adjacent, not necessarily aligned radially with respect to the axis of rotation, and not necessarily arranged successively, parallel to the axis of rotation. By way of a non-limiting example of the present invention, the modules in each group may be of any number and arranged side by side circumferentially with respect to the axis of rotation.

Electric machine 1 described is a radial-flux, permanent-magnet electric machine with buried permanent magnets, though it is understood that the protective scope extends to any other type of permanent-magnet electric machine, such as, for example, a radial-flux electric machine with surface magnets, an axial-flow electric machine, or a cross-flux electric machine.

First and second modules 15, 16 are made of a material normally comprising chemical elements in the rare earth class (e.g. samarium-cobalt or neodymium-iron-boron) and metals.

First and second modules 15, 16 are characterized by the following magnetic properties: thermal class correlated to a maximum operating temperature; intrinsic coercive force Hci; maximum energy product BHmax; and residual induction Br.

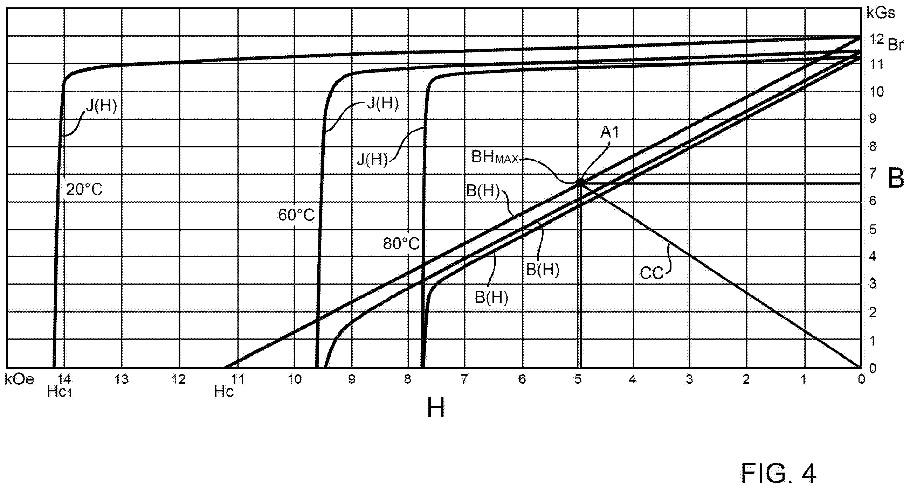

Figure 4 shows an example characteristic graph of a generic module. More specifically, the properties of the module are shown in the second quadrant of a Cartesian graph, in which the x axis shows magnetic field intensity H, and the y axis magnetic flux density B. Each module of material with magnetic characteristics is characterized by a normal magnetization curve B(H) that varies with temperature (Figure 4 shows three normal magnetization curves B(H) relative to different temperatures). Each normal magnetization curve B(H) is related to an intrinsic magnetization curve J(H) which also varies with temperature. More specifically, the normal magnetization curve B(H) and intrinsic magnetization curve J(H) of the same module at the same temperature have the same residual induction Br value. The residual induction Br value is defined by the intersection of the normal magnetization curve B(H) and intrinsic magnetization curve J(H) with the y axis. The intersection of the intrinsic magnetization curve J(H) and the x axis defines the intrinsic coercive force Hci value. The intrinsic coercive force Hci value determines the demagnetization threshold.

The module is also characterized by a maximum energy product BHmax, i.e. the product of the magnetic field H value and the magnetic induction B value, in which said values give the maximum product at nominal operating temperature. The work point A1 of the module is given by the intersection of a load line CC of the module with magnetic properties, and the normal magnetization curve B(H) of the magnetic circuit produced by electric machine 1.

With reference to Figures 2 and 3, which refer to examples not falling any more within the scope of the granted claims, first modules 15 of each rotor segment 12 have different magnetic characteristics from second modules 16. More specifically, first modules 15 have a higher thermal class, and therefore a higher maximum operating temperature, than second modules 16. By way of a non-limiting example of the present invention, first modules 15 have a thermal class H, and second modules 16 a thermal class M.

First modules 15 also have a higher intrinsic coercive force Hci than second modules 16.

In an alternative embodiment, first modules 15 have a lower maximum energy product BHmax value and a lower residual induction Br value than second modules 16. In other words, first modules 15 have a lower energy class than second modules 16. By way of a non-limiting example of the present invention, first modules 15 have an energy class N35, and second modules 16 an energy class N38.

Compared with the known art, electric machine 1 is more efficient for a given cost, or is cheaper for a given degree of efficiency. In fact, a careful study of the magnetic field using a simulation program has shown that, in particular operating conditions, demagnetization in the known art is caused by a critical magnetic field developing exclusively in an area adjacent to air gap 4. The present invention therefore provides for dividing the modules and differentiating the first modules 15 adjacent to stator 2 from the second modules 16. This ensures electric machine 1 does not demagnetize during use, as in the known art, and is of reasonable cost, by only using the higher thermal class modules for first modules 15, thus enabling greater oscillation of the work point for a given operating temperature.

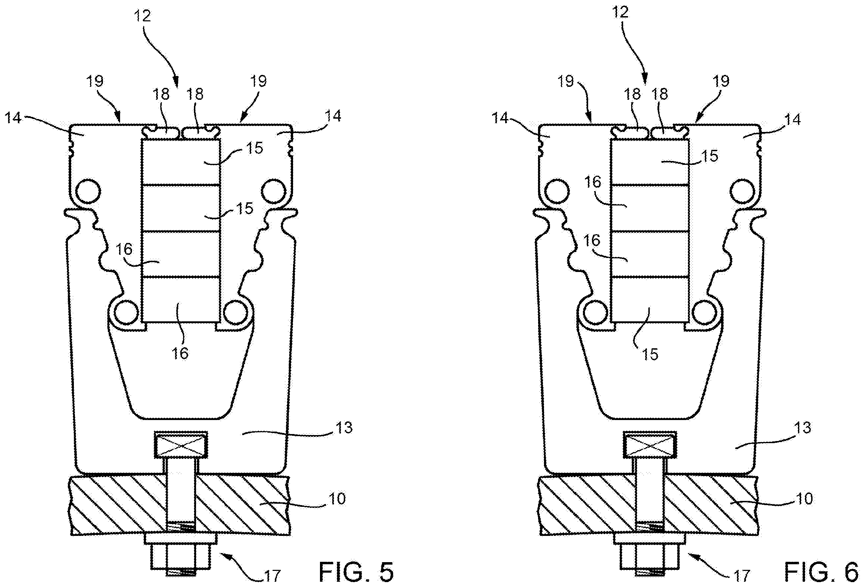

In an alternative embodiment shown in Figure 5 not falling within the scope of the granted claims, each group of modules comprises a number of first modules 15 radially closer to air gap 4 than the number of second modules 16. In a preferred, non-limiting version of the present invention, each group of modules comprises two first modules 15 and two second modules 16.

In the Figure 6 embodiment, one of the three second modules 16 in each group of modules is eliminated, and each group of modules comprises a further first module 15 adjacent to rotor cylinder 10 and radially closer to rotor cylinder 10 than the two second modules 16 and first module 15.

Compared with the known art, electric machine 1 is more efficient for a given cost, or is cheaper for a given degree of efficiency. In fact, a careful study of the magnetic field using a simulation program has shown that, in particular operating conditions, demagnetization in the known art is caused by a critical magnetic field developing exclusively in an area adjacent to stator 2, and by a critical magnetic field developing exclusively in an area of rotor 3 distant from the stator - more specifically, at the inner end of rotor 3. The present invention therefore provides for dividing the modules, and for using modules with different magnetic characteristics according to the critical nature of the magnetic field in each module. More specifically, first modules 15 and second modules 16 are subject to a critical magnetic field when the air gap 4 between rotor 3 and stator 2 decreases or increases respectively. This ensures electric machine 1 does not demagnetize during use, as in the known art, and is of reasonable cost, by only using the higher thermal class modules for first modules 15, thus enabling greater oscillation of the work point for a given operating temperature.

## Claims

1. An electric machine comprising a stator (2) and a rotor (3) separated by an air gap (4), and wherein the rotor (3) rotates with respect to the stator (2) about an axis of rotation (A); the rotor (3) comprising rotor segments (7) arranged about the axis of rotation (A) to a rotor cylinder (10); each rotor segment (7) comprising a gripper (13); magnetic guides (14); at least a first module (15) and at least a second module (16) of material with magnetic properties and permanently magnetizable; and fasteners (17); wherein each group of modules (15, 16) is located between a respective pair of magnetic guides (14), and wherein each pair of magnetic guides (14) is housed inside gripper (13), which is fixed to rotor cylinder (10) by fasteners (17); the first module (15) and second module (16) having different magnetic characteristics; wherein the first module (15) is of a higher thermal class than the second module (16); wherein the first module (15) is adjacent to the air gap (4), and is radially closer to the air gap (4) than the second module (16); the electric machine comprising a further first module (15), and wherein the first module (15) is adjacent to the air gap (4), and is radially closer to the air gap (4) than the second module (16) and the further first module (15); wherein the second module (16) is located between the first module (15) and the further first module (15); wherein the first module (15) and further first module (15) have the same magnetic characteristics.

2. An electric machine as claimed in Claim 1, wherein the first module (15) and second module (16) are arranged radially with respect to the axis of rotation (A), and in particular are aligned radially with each other with respect to the axis of rotation (A).

3. An electric machine as claimed in any one of the foregoing Claims, wherein the first module (15) has a higher intrinsic coercive force (Hci) than the second module (16).

4. An electric machine as claimed in any one of the foregoing Claims, wherein the residual induction (Br) of the first module (15) is less than or equal to the residual induction (Br) of the second module (16).

5. An electric machine as claimed in any one of the foregoing Claims, wherein the maximum energy product (Bhmax) of the first module (15) is less than or equal to the maximum energy product (Bhmax) of the second module (16) .

6. An electric machine as claimed in any one of the foregoing Claims, wherein the first module (15) has a higher maximum operating temperature than the second module (16).

7. An electric machine as claimed in any one of the foregoing Claims, wherein the first module (15) is of a lower or the same energy class as the second module (16).

8. An electric machine as claimed in Claim 1, wherein the further first module (15) is radially further from the air gap (4) than the first module (15) and second module (16).

## Patentansprüche

1. Eine elektrische Maschine, die einen Stator (2) und einen Rotor (3) umfasst, die durch einen Luftspalt (4) getrennt sind, und wobei sich der Rotor (3) relativ zum Stator (2) um eine Drehachse (A) dreht; wobei der Rotor (3) Rotorsegmente (7) umfasst, die um die Drehachse (A) zu einem Rotorzylinder (10) angeordnet sind; wobei jedes Rotorsegment (7) Folgendes umfasst: einen Greifer (13); magnetische Führungen (14); mindestens ein erstes Modul (15) und mindestens ein zweites Modul (16) aus einem Material mit magnetischen Eigenschaften und permanent magnetisierbar; und Befestigungselemente (17); wobei jede Gruppe von Modulen (15, 16) zwischen einem jeweiligen Paar von Magnetführungen (14) angeordnet ist, und wobei jedes Paar von Magnetführungen (14) innerhalb des Greifers (13) untergebracht ist, der durch Befestigungselemente (17) am Rotorzylinder (10) befestigt ist; wobei das erste Modul (15) und das zweite Modul (16) unterschiedliche magnetische Eigenschaften aufweisen; wobei das erste Modul (15) eine höhere Wärmeklasse aufweist als das zweite Modul (16); wobei das erste Modul (15) an den Luftspalt (4) angrenzt und radial näher am Luftspalt (4) liegt als das zweite Modul (16); wobei die elektrische Maschine ein weiteres erstes Modul (15) umfasst, und wobei das erste Modul (15) an den Luftspalt (4) angrenzt und radial näher am Luftspalt (4) liegt als das zweite Modul (16) und das weitere erste Modul (15); wobei das zweite Modul (16) zwischen dem ersten Modul (15) und dem weiteren ersten Modul (15) angeordnet ist; wobei das erste Modul (15) und das weitere erste Modul (15) die gleichen magnetischen Eigenschaften aufweisen.

2. Die elektrische Maschine nach Anspruch 1, wobei das erste Modul (15) und das zweite Modul (16) radial in Bezug auf die Drehachse (A) angeordnet sind, und insbesondere zueinander radial in Bezug auf die Drehachse (A) ausgerichtet sind.

3. Die elektrische Maschine nach irgendeinem der vorstehenden Ansprüche, wobei das erste Modul (15) eine höhere intrinsische Koerzitivkraft *(intrinsic coercive force)* (Hci) aufweist als das zweite Modul (16).

4. Die elektrische Maschine nach irgendeinem der vorstehenden Ansprüche, wobei die Restinduktion *(residual induction)* (Br) des ersten Moduls (15) kleiner oder gleich der Restinduktion (Br) des zweiten Moduls (16) ist.

5. Die elektrische Maschine nach irgendeinem der vorstehenden Ansprüche, wobei das maximale Energieprodukt (Bhmax) des ersten Moduls (15) kleiner oder gleich dem maximalen Energieprodukt (Bhmax) des zweiten Moduls (16) ist.

6. Die elektrische Maschine nach irgendeinem der vorstehenden Ansprüche, wobei das erste Modul (15) eine höhere maximale Betriebstemperatur aufweist als das zweite Modul (16).

7. Die elektrische Maschine nach irgendeinem der vorstehenden Ansprüche, wobei das erste Modul (15) eine niedrigere oder die gleiche Energieklasse wie das zweite Modul (16) aufweist.

8. Die elektrische Maschine nach Anspruch 1, wobei das weitere erste Modul (15) radial weiter vom Luftspalt (4) entfernt ist als das erste Modul (15) und das zweite Modul (16).

## Revendications

1. Une machine électrique comprenant un stator (2) et un rotor (3) séparés par un entrefer (4), et dans laquelle le rotor (3) tourne par rapport au stator (2) autour d'un axe de rotation (A) ; le rotor (3) comprenant des segments de rotor (7) disposés autour de l'axe de rotation (A) vers un cylindre de rotor (10) ; chaque segment de rotor (7) comprenant une pince (13) ; des guides magnétiques (14) ; au moins un premier module (15) et au moins un second module (16) en matériau ayant des propriétés magnétiques et pouvant être magnétisé de façon permanente ; et des fixations (17) ; dans lequel chaque groupe de modules (15, 16) est situé entre une paire respective de guides magnétiques (14), et dans lequel chaque paire de guides magnétiques (14) est logée à l'intérieur de la pince (13), qui est fixée au cylindre de rotor (10) par des fixations (17) ; le premier module (15) et le second module (16) ayant des caractéristiques magnétiques différentes ; dans lequel le premier module (15) est d'une classe thermique supérieure à celle du second module (16) ; dans lequel le premier module (15) est adjacent à l'entrefer (4), et est radialement plus proche de l'entrefer (4) que le second module (16) ; la machine électrique comprenant un autre premier module (15), et dans laquelle le premier module (15) est adjacent à l'entrefer (4), et est radialement plus proche de l'entrefer (4) que le second module (16) et l'autre premier module (15) ; dans laquelle le second module (16) est situé entre le premier module (15) et l'autre premier module (15) ; dans laquelle le premier module (15) et l'autre premier module (15) ont les mêmes caractéristiques magnétiques.

2. Machine électrique selon la revendication 1, dans laquelle le premier module (15) et le deuxième module (16) sont disposés radialement par rapport à l'axe de rotation (A), et en particulier sont alignés radialement l'un par rapport à l'autre par rapport à l'axe de rotation (A).

3. Machine électrique selon l'une quelconque des revendications précédentes, dans laquelle le premier module (15) présente une force coercitive intrinsèque (Hci) supérieure à celle du second module (16).

4. Machine électrique selon l'une quelconque des revendications précédentes, dans laquelle l'induction résiduelle (Br) du premier module (15) est inférieure ou égale à l'induction résiduelle (Br) du second module (16).

5. Machine électrique selon l'une quelconque des revendications précédentes, dans laquelle le produit énergétique maximal (Bhmax) du premier module (15) est inférieur ou égal au produit énergétique maximal (Bhmax) du second module (16).

6. Machine électrique selon l'une quelconque des revendications précédentes, dans laquelle le premier module (15) a une température maximale de fonctionnement supérieure à celle du second module (16).

7. Machine électrique selon l'une quelconque des revendications précédentes, dans laquelle le premier module (15) est d'une classe énergétique inférieure ou identique à celle du second module (16).

8. Machine électrique selon la revendication 1, dans laquelle l'autre premier module (15) est radialement plus éloigné de l'entrefer (4) que le premier module (15) et le deuxième module (16).
